# EUROPEAN PATENT APPLICATION

(11) **EP 4 722 923 A1**
(43) Date of publication of application: **08.04.2026**
(21) Application number: 23938711.1
(22) Date of filing: 26.05.2023
(51) Int. Cl.: G06F 11/22, B60R 16/02, G06F 8/65

(54) **ELECTRONIC CONTROL DEVICE AND ELECTRONIC CONTROL METHOD**

(71) Applicant: Nissan Motor Co., Ltd., Yokohama-shi, Kanagawa 221-0023 (JP)
(72) Inventor: UZUMI, Masaaki, Atsugi-shi, Kanagawa 243-0123 (JP); ATAGO, Yoshinori, Atsugi-shi, Kanagawa 243-0123 (JP); AMAGASAKI, Shin, Atsugi-shi, Kanagawa 243-0123 (JP); OHASHI, Eisuke, Atsugi-shi, Kanagawa 243-0123 (JP); HAYASHI, Hidetoshi, Atsugi-shi, Kanagawa 243-0123 (JP); MORITA, Koji, Atsugi-shi, Kanagawa 243-0123 (JP)
(74) Representative: Osha BWB
(86) International application number: PCT/JP2023/019782
(87) International publication number: WO 2024/247006

(57) **Abstract**

An electronic control device includes: a diagnosis unit 10 configured to output an execution command for abnormality diagnosis of an ECU; a target ECU 40 to be diagnosed in response to the execution command; and a relay unit 30 configured to relay communication among ECUs. The relay unit 30 transmits data received via OTA communication to the target ECU 40. The diagnosis unit 10 withholds output of the execution command while the relay unit 30 and the target ECU 40 perform data communication for transmitting and receiving data between the relay unit 30 and the target ECU 40.

## Description

### Technical Field

The present invention relates to an electronic control device and an electronic control method.

### Background Art

Vehicle control devices that update programs have been conventionally known (e.g., Patent Document 1). A vehicle control device described in Patent Document 1 gathers a first update state of a first program to be executed by the vehicle control device and a second update state of a second program to be executed by a second vehicle control device, transmits these update states to an update server, receives a post-update program corresponding to the first update state and a post-update program corresponding to the second update state from the update server, and executes an update process.

### Prior Art Document

### Patent Document

Patent Document 1: JP-A-2022-107913

### Summary of Invention

### Problems to be Solved by Invention

Vehicle control devices sometimes have specifications that do not allow reception and transmission of data to be performed simultaneously. In a case where the above-described vehicle control device is designed to have such specifications, a problem arises in that, if the vehicle control device performs communication to execute a process different from program update while performing communication with the server in order to receive data such as the post-update programs, interference occurs between these communications.

An object to be achieved by the present invention is to provide an electronic control device and an electronic control method for preventing interference between communications.

### Means for Solving Problems

The present invention achieves the above-described object by: transmitting data received via OTA communication, from a relay unit to a target ECU; and withholding output of an execution command for abnormality diagnosis of the target ECU while performing data communication for transmitting and receiving data between the relay unit and the target ECU.

### Effects of Invention

The present invention enables prevention of interference between communications.

### Brief Description of Drawings

FIG. 1 is a block diagram of an over-the-air (OTA) system according to an embodiment of the present invention.
FIG. 2 is a diagram for explaining sequence control for software update to be performed by an in-vehicle control device in FIG. 1.
FIG. 3 is a diagram for explaining a control flow of a vehicle control method to be performed by the in-vehicle control device in FIG. 1.
FIG. 4 is a diagram for explaining a control flow of the vehicle control method to be performed by the in-vehicle control device in FIG. 1.
FIG. 5 is a diagram for explaining a control flow of the vehicle control method to be performed by the in-vehicle control device in FIG. 1.

### Mode(s) for Carrying out the Invention

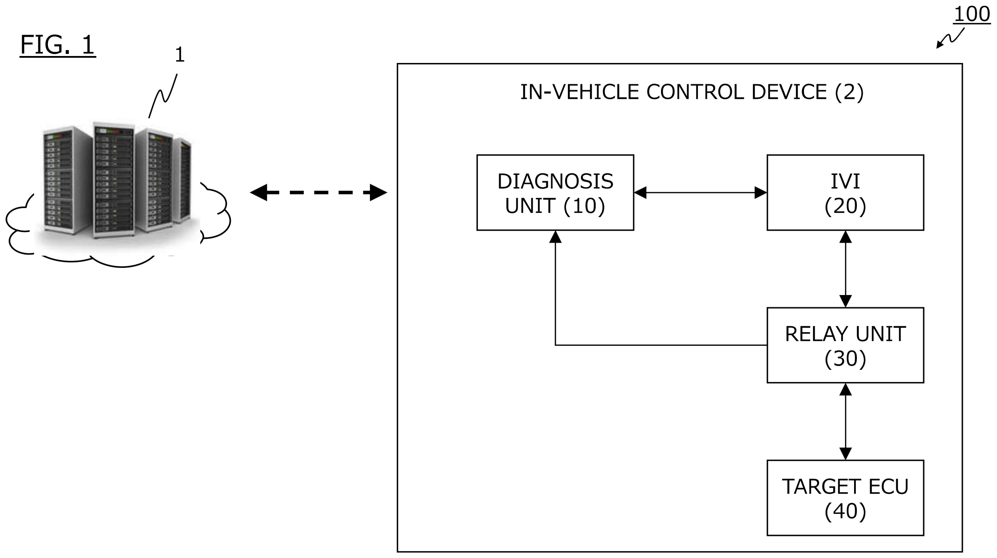

Hereinafter, an electronic control device and an electronic control method according to an embodiment of the present invention will be described with reference to the drawings. FIG. 1 is a block diagram of an over-the-air (OTA) system according to the embodiment of the present invention. An OTA system 100 includes a server 1 and an in-vehicle control device 2. The OTA system 100 is a system for transmitting and receiving data via OTA communication (wireless communication) between the server 1 and a vehicle mounted with the in-vehicle control device 2 and is used for, for example, updating software (firmware) of an electronic control unit (ECU) included in the in-vehicle control device 2. The OTA system 100 may be used not only for communication between the vehicle and the server but also for inter-vehicle communication (by an inter-vehicle connected function), and communication between the server 1 and a user communication terminal. The in-vehicle control device 2 corresponds to the "electronic control device" of the present invention, and a vehicle control method to be performed by the in-vehicle control device 2 corresponds to the "electronic control method" of the present invention.

The server 1 has a database in which update data for updating the software of the ECU is stored. The server 1 transmits the update data to the vehicle in response to an update request. The server 1 manages, in the database, a campaign including identification information about the vehicle (VIN), identification information about the ECU (e.g., a name of the ECU), and the like. For example, when a latest version of the software of the ECU is uploaded, the server 1 transmits an update request command in order to acquire information necessary for updating the software from the vehicle. The update request command may include, for example, the identification information (ID) about the software or the ECU to be updated. The in-vehicle control device 2 of the vehicle transmits a signal including, for example, update information (version information) about the ECU to the server 1 in response to the request from the server 1. The server 1 determines, based on the update information, whether the software of the ECU is of the latest version. In a case where the server 1 determines that the present version of the ECU is old, the server 1 transmits latest software (update data, reprogramming data) to the vehicle. The in-vehicle control device 2 of the vehicle downloads the update data transmitted from the server 1. Then, the in-vehicle control device 2 uses the update data to update the software of the ECU to be updated.

A user of the vehicle can connect a communication terminal possessed by the user (user communication terminal) to the server 1 via OTA communication and can give an instruction regarding update of the software. The instruction is, for example, an instruction to approve or cancel the update. In addition, the user can ascertain the progress of update of the software and content of the update on a screen of the user communication terminal.

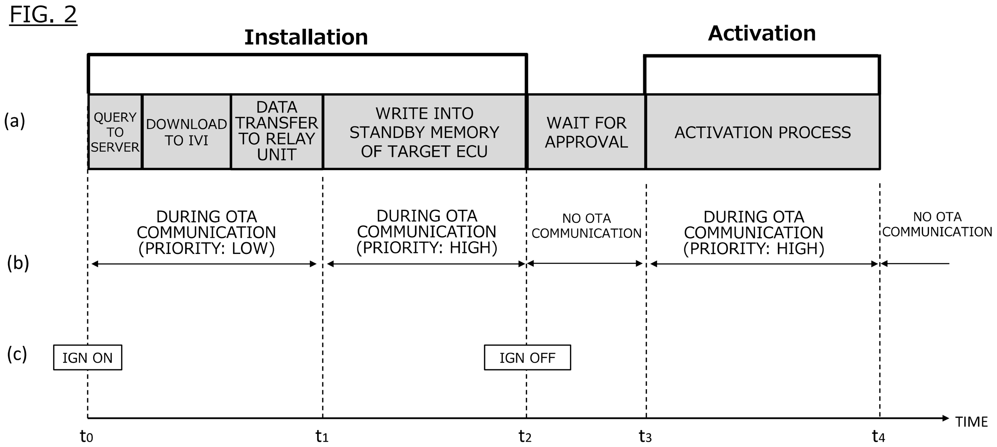

The in-vehicle control device 2 has a plurality of such ECUs. The ECUs are connected to one another via a communication network such as CAN or LIN and enable transmission and reception of data among the ECUs. The in-vehicle control device 2 includes, as the plurality of ECUs, a diagnosis unit 10, an in-vehicle infotainment (IVI) 20, a relay unit 30, and a target ECU (40). The diagnosis unit 10 and the like shown in FIG. 2 are examples of the ECUs, and the vehicle has ECUs other than the ECUs such as the diagnosis unit 10 shown in FIG. 2. Examples of the other ECUs include: a module for controlling a battery; a power switch (ignition switch); and a body control module (BCM) for controlling a mirror or the like. The solid-line arrows in FIG. 2 indicate an example of a signal network among the ECUs. In another example, the diagnosis unit 10 may be connected to the target ECU 40 via a communication line.

The diagnosis unit 10 is a control unit for performing abnormality diagnosis on each of the ECUs. The diagnosis unit 10 performs, in response to remote diagnosis and/or regular diagnosis, diagnosis regarding whether the ECU has sustained an abnormality. The remote diagnosis is performed as a result of being triggered by a diagnosis request from the server 1. The regular diagnosis is performed based on a diagnosis request regularly made inside the in-vehicle control device 2. The ECU manages a diagnosis timing and performs such regular diagnosis. The diagnosis unit 10 outputs, in response to either of the diagnosis requests, an execution command for abnormality diagnosis (diagnosis command) to the ECU to be diagnosed. The ECU having received the execution command for abnormality diagnosis performs diagnosis regarding, for example, whether there is an imperfection in a software process, a data structure, or the like. For example, in the case of performing abnormality diagnosis on the target ECU, the diagnosis unit 10 outputs an execution command for abnormality diagnosis to the target ECU 40 via the communication network inside the vehicle.

The ECU having ended the diagnosis transmits a diagnosis result to the diagnosis unit 10. The diagnosis unit 10 transmits the diagnosis result to the server 1 and/or the user communication terminal. The diagnosis unit 10 collects, from each of the plurality of ECUs mounted in the vehicle, data including the diagnosis result regarding the ECU and transmits the collected data to the server. The data including the diagnosis result indicates presence/absence of an abnormality, the identification information about the ECU to be diagnosed, update information about the software, or the like. When performing abnormality diagnosis in response to the remote diagnosis and/or the regular diagnosis, the diagnosis unit 10 may transmit not only an execution command for abnormality diagnosis but also diagnostic data necessary for diagnosis to the ECU. For example, in the case of receiving a diagnosis request from the server 1 and permitting diagnosis, the diagnosis unit 10 receives diagnostic data including a diagnostic program or the like from the server 1 and transmits the diagnostic data to the ECU to be diagnosed. The diagnosis unit 10 may regard only the ECU specified in the diagnosis request as a diagnosis target or may regard all of the ECUs included in the in-vehicle control device 2 as diagnosis targets.

The IVI 20 provides information about travel of the vehicle such as map information or traffic information or information about amusement such as music or video to the user via an in-vehicle system such as a navigation system. The IVI 20 has: a function of controlling a human-machine interface (HMI) such as an in-vehicle display; a data transfer function exhibited when data is transmitted and received between the server 1 and the ECU via OTA communication; or the like. In addition, the IVI 20 manages, by means of a table, various communication states of OTA communications with the respective ECUs, communication among the ECUs, and the like.

Here, the data transfer function and the communication state management function of the IVI 20 will be described with software update being taken as an example. In order to update the software of any of the ECUs, the in-vehicle control device 2 is connected to the server 1 via OTA communication and receives the update data from the server 1. The IVI 20 transmits the update data received from the server to the relay unit 30. The relay unit 30 transmits the update data to the target ECU 40. The target ECU 40 has a memory in which software is stored, and the memory is divided by a plurality of banks in order to switch the software. The software included in this update data is written into the memory of the target ECU (installation). In a state where the old and new versions of the software are stored in the memory, the target ECU 40 switches the software to be processed, from the old version of the software to the new version of the software (activation). Such a process for software update does not necessarily have to be performed as a series of events. For example, a configuration may be employed in which approval is obtained from the user before switching of the software (activation) in the target ECU is performed. The relay unit 30 regularly (periodically) transmits communication state signals indicating communication states of OTA communications including communication among the ECUs to the IVI 20. The communication states include not only communication states where the OTA communications are being performed, but also communication states where no OTA communication is being performed. In the case of software update, the communication states where the OTA communications are being performed may indicate various kinds of sequence control for the installation, the activation, and the like in distinction from one another.

The relay unit 30 transmits the communication state signals indicating not only communication states with the target ECU 40 but also communication states with the other ECUs to the IVI 20. The IVI 20 manages, by means of a table, the communication states of the OTA communications with the respective ECUs based on the communication state signals. While sequence control for software update is being performed, the IVI 20 receives each of the communication state signals from the relay unit 30, compares the communication state indicated by the received communication state signal with the corresponding communication state managed by means of the table, and, in a case where the states differ from each other, stops the sequence control for software update to interrupt the corresponding OTA communication.

The relay unit 30 is a unit (gateway) for relaying communication among the ECUs. The relay unit 30 transmits data received via OTA communication to the target ECU 40. For example, in the case of updating the software of the target ECU 40, the relay unit 30 transmits the update data received from the server 1 to the target ECU 40. In a case where data communication is being performed between the relay unit 30 and the target ECU 40, the relay unit 30 transmits a communication state signal indicating a communication state of the data communication to the IVI 20. For example, as described above, in a case where OTA communication is being performed for software update, the relay unit 30 transmits a communication state signal related to the OTA communication to the IVI 20 while sequence control for software update is being performed. In addition, the relay unit 30 transmits the communication state signal to the diagnosis unit 10. The purpose of the transmission of the communication state signal to the diagnosis unit 10 by the relay unit 30 is to enable the diagnosis unit 10 to ascertain the communication state of the OTA communication.

The target ECU 40 is an ECU to be diagnosed in response to an execution command for abnormality diagnosis transmitted from the diagnosis unit 10. In other words, the target ECU 40 is an ECU specified for diagnosis by the diagnosis unit 10. The target ECU 40 has a memory in which software is stored. In sequence control for software update, the target ECU 40 transmits version information about the target ECU 40, installs update data, and activates the update data during the data communication with the relay unit 30.

Next, the sequence control for software update will be described with reference to FIG. 2. In FIG. 2, (a) indicates processing steps (sequence) for software update, (b) indicates communication states of OTA communication, and (c) indicates ON/OFF states of a main switch (ignition switch: IGN) of the vehicle. FIG. 2 has a horizontal axis indicating time. At a time point t₀, the user turns on the main switch so that the vehicle starts traveling. The IVI 20 establishes OTA communication with the server 1 and queries the server 1 about software update. The IVI 20 may gather pieces of update information (version information) about pieces of software of the ECUs and may transmit the pieces of update information to the server 1 at the time of the query about software update. The in-vehicle control device 2 downloads, to the IVI 20, update data transmitted from the server 1. The IVI 20 transmits the update data to the relay unit 30. At a time point t₁, when the transmission of the update data to the relay unit 30 is ended, the relay unit 30 writes the update data into a standby memory of the target ECU 40. The standby memory corresponds to a memory area obtained through division by banks. Then, at a time point t₂, the user turns off the main switch so that the vehicle is stopped.

After the main switch is turned off, the IVI 20 displays a confirmation screen regarding whether or not to approve activation on a display screen of an in-vehicle display and/or a user terminal device and waits for the user's approval. At a time point t₃, when the user performs an input operation for approval, the IVI 20 transmits an activation command to the target ECU 40 and executes activation. The activation command includes a bank switching command for the target ECU 40, a reboot command for the target ECU 40, and the like. Then, at a time point t₄, the IVI 20 ends the activation. In the sequence for software update, the period from the time point t₁ to the time point t₂ corresponds to installation (download), and the period from the time point t₃ to the time point t₄ corresponds to activation.

The target ECU 40 is an ECU that conforms with a software-related standard defined by a platform for standard software to be installed in a vehicle, the platform being exemplified by AUTOSAR (registered trademark). The target ECU 40 cannot simultaneously perform OTA communication and communication for diagnosis. For example, in a case where the target ECU 40 has received an execution command for abnormality diagnosis from the diagnosis unit 10 during OTA communication, the OTA communication and communication for diagnosis interfere with each other, and the target ECU 40 interrupts the OTA communication and performs diagnosis.

Interference between communications at the time of outputting an execution command for abnormality diagnosis during the sequence for software update will be described with reference to FIG. 2. In the sequence control for software update shown in FIG. 2, installation is performed during OTA communication. In the period from the time point t₁ to the time point t₂ during the installation, the update data is being transmitted and received between the relay unit 30 and the target ECU 40, and, when the diagnosis unit 10 outputs an execution command for abnormality diagnosis during the data communication for the installation, the data communication is interrupted. Similarly, in the period from the time point t₃ to the time point t₄ during the activation as well, data communication is being performed between the relay unit 30 and the target ECU 40 in response to, for example, a bank switching instruction or the like, and, when the diagnosis unit 10 outputs an execution command for abnormality diagnosis during the data communication for the activation, the data communication is interrupted.

Meanwhile, in the sequence control for software update shown in FIG. 2, OTA communication is performed in neither the period from the time point t₂ to the time point t₃ nor the period from the time point t₄ onward. Therefore, even when the diagnosis unit 10 outputs an execution command for abnormality diagnosis, interference between communications does not occur. In the period from the time point t₀ to the time point t₁ during the installation, OTA communication is being performed, but the communication performed for the sequence control during this period does not include data communication between the relay unit 30 and the target ECU 40. Therefore, even when the diagnosis unit 10 outputs an execution command for abnormality diagnosis in the period from the time point t₀ to the time point t₁, interference between communications does not occur.

In this embodiment, interference between communications is prevented. To this end, the diagnosis unit 10 withholds output of an execution command for abnormality diagnosis while the relay unit 30 and the target ECU 40 performs data communication. The diagnosis unit 10 receives a communication state signal from the relay unit 30 in order to determine a timing of outputting an execution command for abnormality diagnosis. In the example indicated by (b) in FIG. 2, the communication state is divided into "DURING OTA COMMUNICATION (PRIORITY: LOW)", "DURING OTA COMMUNICATION (PRIORITY: HIGH)", and "NO OTA COMMUNICATION". "DURING OTA COMMUNICATION (PRIORITY: LOW)" indicates a state where: OTA communication is being performed; but no data communication is being performed between the relay unit 30 and the target ECU 40. "DURING OTA COMMUNICATION (PRIORITY: HIGH)" indicates a state where: OTA communication is being performed; and data communication is being performed between the relay unit 30 and the target ECU 40. "NO OTA COMMUNICATION" indicates a state where no OTA communication is being performed (idle state) or a state where no data communication with the server 1 is being performed. The relay unit 30 receives a communication state signal indicating a communication state according to the sequence for software update. For example, in a case where a query about software update (query to server) is performed in the sequence control for software update, the relay unit 30 transmits a communication state signal indicating "DURING OTA COMMUNICATION (PRIORITY: LOW)" to the diagnosis unit 10. The priority being high or low indicates whether or not the sequence control for software update is prioritized over another kind of control during the installation or activation, the priority being high indicates that the sequence control for software update is prioritized, and the priority being low indicates that another kind of control is prioritized.

In a case where the diagnosis unit 10 has received a diagnosis request from the server 1 or a timing of regular diagnosis has arrived, the diagnosis unit 10 outputs an execution command for abnormality diagnosis while no data communication is being performed between the relay unit 30 and the target ECU 40. Meanwhile, in the case where the diagnosis unit 10 has received a diagnosis request from the server 1 or a timing of regular diagnosis has arrived, the diagnosis unit 10 withholds output of an execution command for abnormality diagnosis while the relay unit 30 and the target ECU 40 performs the data communication. In the example in FIG. 2, in a case where the communication state is "DURING OTA COMMUNICATION (PRIORITY: HIGH)", the diagnosis unit 10 withholds output of an execution command for abnormality diagnosis. When the diagnosis unit 10 has received a diagnosis request from the server 1 or a timing of regular diagnosis has arrived in the case where the communication state is "DURING OTA COMMUNICATION (PRIORITY: HIGH)", the diagnosis unit 10 outputs an execution command for abnormality diagnosis after the data communication between the relay unit 30 and the target ECU 40 is ended.

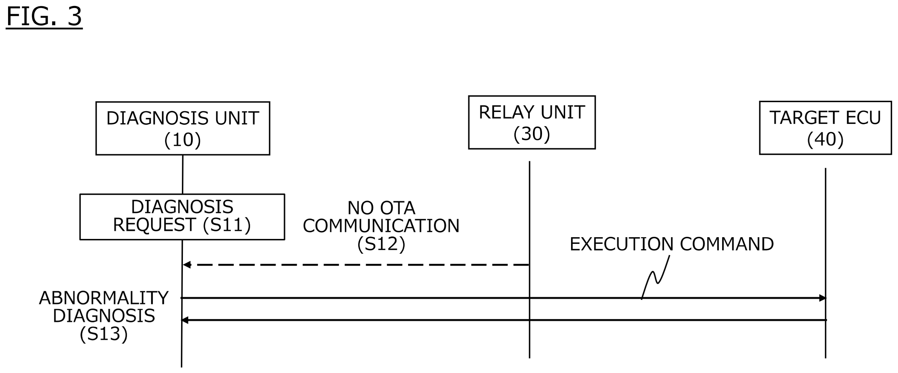

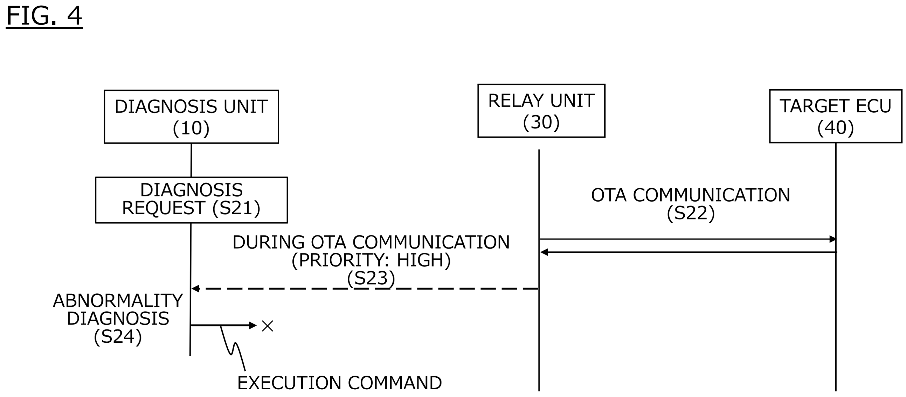

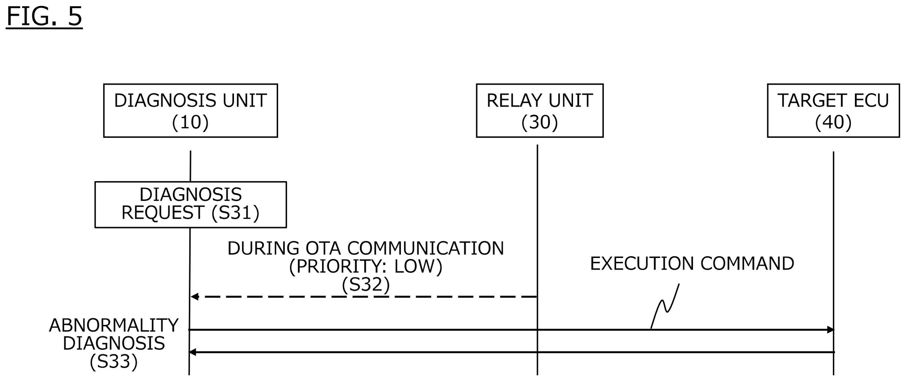

Next, control flows of the vehicle control method will be described with reference to FIG. 3 to FIG. 5. FIG. 3 shows a control flow in a case where the communication state is "NO OTA COMMUNICATION". FIG. 4 shows a control flow in a case where the communication state is "DURING OTA COMMUNICATION (PRIORITY: HIGH)". FIG. 5 shows a control flow in a case where the communication state is "DURING OTA COMMUNICATION (PRIORITY: LOW)".

In step S11, the diagnosis unit 10 receives a diagnosis request from the server 1. Alternatively, the diagnosis unit 10 identifies a diagnosis timing based on a diagnosis request that is regularly made. In step S12, the relay unit 30 transmits a communication state signal indicating the communication state of OTA communication "NO OTA COMMUNICATION" to the diagnosis unit 10. The diagnosis unit 10 receives the communication state signal from the relay unit 30 and ascertains the present communication state. The relay unit 30 may transmit a communication state signal to the diagnosis unit 10 at a predetermined cycle. The diagnosis unit 10 may ascertain the present communication state based on a communication state signal received immediately after or immediately before a timing at which the diagnosis request is received from the server 1 or a timing of regular diagnosis.

In step S13, the diagnosis unit 10 determines, according to the communication state, whether an execution command for abnormality diagnosis can be outputted. In a case where the communication state is "NO OTA COMMUNICATION" or "DURING OTA COMMUNICATION (PRIORITY: LOW)", the diagnosis unit 10 determines that an execution command for abnormality diagnosis can be outputted. Meanwhile, in a case where the communication state is "DURING OTA COMMUNICATION (PRIORITY: HIGH)", the diagnosis unit 10 determines that an execution command for abnormality diagnosis cannot be outputted. In other words, in a case where no data communication is being performed between the relay unit 30 and the target ECU 40, the diagnosis unit 10 determines that an execution command for abnormality diagnosis can be outputted. Meanwhile, in a case where the relay unit 30 and the target ECU 40 performs data communication, the diagnosis unit 10 determines that an execution command for abnormality diagnosis cannot be outputted.

In the example in FIG. 3, the communication state is "NO OTA COMMUNICATION", and the diagnosis unit 10 transmits an execution command for abnormality diagnosis to the target ECU 40. The target ECU 40 performs diagnosis based on the execution command for abnormality diagnosis and transmits a diagnosis result to the diagnosis unit 10 (S13).

In a case where the communication state is "DURING OTA COMMUNICATION (PRIORITY: HIGH)", the in-vehicle control device 2 performs the following control flow. As shown in FIG. 4, in step S21, the diagnosis unit 10 receives a diagnosis request from the server 1. Alternatively, the diagnosis unit 10 identifies a diagnosis timing based on a diagnosis request that is regularly made. In step S22, the relay unit 30 transmits update data for software update, and the target ECU 40 receives the update data. In step S23, the relay unit 30 transmits a communication state signal indicating the communication state of OTA communication "DURING OTA COMMUNICATION (PRIORITY: HIGH)" to the diagnosis unit 10. The diagnosis unit 10 receives the communication state signal from the relay unit 30 and ascertains the present communication state. In the example in FIG. 4, the communication state is "DURING OTA COMMUNICATION (PRIORITY: HIGH)", and the diagnosis unit 10 determines that an execution command for abnormality diagnosis cannot be outputted, and withholds output of an execution command for abnormality diagnosis (S24). The method for the determination in step S24 is identical to the method for the determination in step S13.

In a case where the communication state is "DURING OTA COMMUNICATION (PRIORITY: LOW)", the in-vehicle control device 2 performs the following control flow. As shown in FIG. 5, in step S31, the diagnosis unit 10 receives a diagnosis request from the server 1. Alternatively, the diagnosis unit 10 identifies a diagnosis timing based on a diagnosis request that is regularly made. In step S32, the relay unit 30 transmits a communication state signal indicating the communication state of OTA communication "DURING OTA COMMUNICATION (PRIORITY: LOW)" to the diagnosis unit 10. The diagnosis unit 10 receives the communication state signal from the relay unit 30 and ascertains the present communication state, without outputting any execution command for abnormality diagnosis. In step S33, the diagnosis unit 10 determines, according to the communication state, whether an execution command for abnormality diagnosis can be outputted. In the example in FIG. 5, the communication state is "DURING OTA COMMUNICATION (PRIORITY: LOW)", and the diagnosis unit 10 determines that an execution command for abnormality diagnosis can be outputted, and transmits an execution command for abnormality diagnosis to the target ECU 40. The target ECU 40 performs diagnosis based on the execution command for abnormality diagnosis and transmits a diagnosis result to the diagnosis unit 10 (S33). The method for the determination in step S33 is identical to the method for the determination in step S13.

As described above, in the in-vehicle control device 2 or the vehicle control method according to this embodiment, the relay unit 30 transmits data received via OTA communication to the target ECU 40, and the diagnosis unit 10 withholds output of an execution command for abnormality diagnosis while the relay unit 30 and the target ECU 40 performs data communication for transmitting and receiving data between the relay unit 30 and the target ECU 40. Consequently, the data communication between the relay unit 30 and the target ECU 40 can be prevented from being interrupted by the execution command for abnormality diagnosis. As a result, interference between communications can be prevented.

Also, in this embodiment, the relay unit 30 transmits a communication state signal indicating a communication state of the data communication to the diagnosis unit 10. Consequently, the diagnosis unit 10 can ascertain a timing of interference with the data communication between the relay unit 30 and the target ECU 40. That is, the in-vehicle control device 2 is configured to regularly transmit a signal indicating a communication state of the OTA communication to the IVI 20, and furthermore, transmit the signal also to the diagnosis unit 10 so that the diagnosis unit 10 can ascertain the communication state of the OTA communication.

Also, in this embodiment, the diagnosis unit 10 receives a diagnosis request via the OTA communication and, in a case where the diagnosis unit 10 has received the diagnosis request, withholds output of the execution command for abnormality diagnosis while the data communication is being performed between the relay unit 30 and the target ECU 40. Consequently, the data communication between the relay unit 30 and the target ECU 40 can be prevented from being interrupted by the execution command for abnormality diagnosis. As a result, interference between communications can be prevented.

Also, in this embodiment, in a case where, while the data communication is being performed between the relay unit 30 and the target ECU 40, the diagnosis unit 10 has received a diagnosis request via the OTA communication or a timing of regular diagnosis has arrived, the diagnosis unit 10 outputs the execution command for abnormality diagnosis after the data communication is ended. Consequently, abnormality diagnosis can be performed through avoidance of a period in which interference between communications would occur.

Also, in this embodiment, the target ECU 40 transmits version information about the target ECU 40, installs update data for updating the software, and activates the update data during the data communication between the relay unit 30 and the target ECU 40. Consequently, update of the software can be prevented from being interrupted as a result of outputting the execution command for abnormality diagnosis.

Also, in this embodiment, the diagnosis unit 10 collects, from each of a plurality of ECUs mounted in a vehicle, data including a diagnosis result regarding the ECU and transmits the collected data to the server 1. Consequently, interference between communications can be prevented, abnormality diagnosis can be performed, and a diagnosis result can be transmitted to the server 1.

A modification of this embodiment may be implemented as follows. That is, the target ECU 40 performs detection regarding whether or not an update abnormality has occurred during update of the software, and, in a case where an update abnormality has occurred, interrupts the update of the software and transmits, to the diagnosis unit 10, an abnormality occurrence signal indicating that an update abnormality has occurred, and the diagnosis unit 10 outputs the execution command for performing abnormality diagnosis on the target ECU. Consequently, diagnosis can be performed regarding whether the update abnormality of the software has occurred owing to an abnormality of the ECU.

Another modification of this embodiment may be implemented as follows. That is, the target ECU 40 is an ECU having a high automotive safety integrity level (ASIL), and, in a case where, during update of the software, a diagnosis request has been received via the OTA communication or a timing of regular diagnosis has arrived, the update of the software is interrupted, and the diagnosis unit 10 outputs the execution command for abnormality diagnosis. Among the plurality of ECUs, for example, an ECU related to travel control for the vehicle is a control unit having a high automotive safety integrity level (ASIL). In a case where a diagnosis request is inputted to such an ECU from, for example, the server 1, diagnosis may be prioritized over update of the software.

Although the communication state in the installation is divided into "DURING OTA COMMUNICATION (PRIORITY: LOW)" and "DURING OTA COMMUNICATION (PRIORITY: HIGH)" in this embodiment, division based on priority (high/low) does not have to be performed. In this case, the diagnosis unit 10 may control the output timing for an execution command for abnormality diagnosis so as to withhold output of the execution command during the OTA communication. In the example in FIG. 2, the diagnosis unit 10 does not have to output any execution command for abnormality diagnosis during the period from the time point t₀ to the time point t₁. Consequently, the period in which an execution command for abnormality diagnosis can be outputted is shortened, but this modification enables at least prevention of interference with communication for diagnosis during the data communication between the relay unit 30 and the target ECU 40.

### Description of Reference Numerals

- 1: server
- 2: in-vehicle control device
- 10: diagnosis unit
- 20: IVI
- 30: relay unit
- 40: target ECU
- 100: OTA system

## Claims

1. An electronic control device comprising:
a diagnosis unit configured to output an execution command for abnormality diagnosis of an ECU;
a target ECU to be diagnosed in response to the execution command; and
a relay unit configured to relay communication among ECUs, wherein
the relay unit transmits data received via OTA communication to the target ECU, and
the diagnosis unit withholds output of the execution command while the relay unit and the target ECU perform data communication for transmitting and receiving data between the relay unit and the target ECU.

2. The electronic control device according to claim 1, wherein
the relay unit transmits a communication state signal indicating a communication state of the data communication to the diagnosis unit.

3. The electronic control device according to claim 1 or 2, wherein
the diagnosis unit:
receives a diagnosis request via the OTA communication; and
withholds output of the execution command while the data communication is being performed when the diagnosis request has been received.

4. The electronic control device according to any one of claims 1 to 3, wherein,
when the diagnosis unit has received a diagnosis request via the OTA communication or a timing of regular diagnosis has arrived while the data communication is being performed, the diagnosis unit outputs the execution command after the data communication is ended.

5. The electronic control device according to any one of claims 1 to 4, wherein
the target ECU:
includes a memory in which software is stored; and
transmits version information about the target ECU, installs update data for updating the software, and activates the update data during the data communication.

6. The electronic control device according to any one of claims 1 to 5, wherein
the diagnosis unit collects, from each of a plurality of ECUs mounted in a vehicle, data including a diagnosis result regarding the ECU, and transmits the collected data to a server.

7. The electronic control device according to any one of claims 1 to 6, wherein
the target ECU:
includes a memory in which software is stored;
updates the software during the data communication; and,
in a case where an update abnormality has occurred during update of the software, interrupts the update of the software and transmits, to the diagnosis unit, an abnormality occurrence signal indicating that the update abnormality has occurred, and
the diagnosis unit outputs the execution command for performing abnormality diagnosis on the target ECU.

8. The electronic control device according to any one of claims 1 to 7, wherein
the target ECU:
includes a memory in which software is stored; and
is an ECU having a high automotive safety integrity level, and,
in a case where, during update of the software, a diagnosis request has been received via the OTA communication or a timing of regular diagnosis has arrived, the update of the software is interrupted, and the diagnosis unit outputs the execution command.

9. An electronic control method to be performed by an electronic control device including a diagnosis unit configured to perform abnormality diagnosis on an ECU, and a relay unit configured to relay communication among ECUs, wherein
the diagnosis unit outputs an execution command for abnormality diagnosis to diagnose a target ECU to be diagnosed,
the relay unit transmits data received via OTA communication to the target ECU, and
the diagnosis unit withholds output of the execution command while the relay unit and the target ECU perform data communication for transmitting and receiving data between the relay unit and the target ECU.
